# EUROPEAN PATENT SPECIFICATION

(11) **EP 3 364 261 B1**
(45) Date of publication and mention of the grant of the patent: **01.01.2020**
(21) Application number: 17156173.1
(22) Date of filing: 15.02.2017
(51) Int. Cl.: G05B 19/05

(54) **GENERATION OF PARTIAL PLANT TOPOLOGY DATA FROM PLANT OPERATIONS DATA**
ERZEUGUNG VON PARTIELLEN ANLAGENTOPOLOGIEDATEN VON ANLAGENABLAUFSDATEN
GÉNÉRATION DE DONNÉES PARTIELLES DE TOPOLOGIE D'UNE INSTALLATION À PARTIR DES DONNÉES DE FONCTIONNEMENT DE L'INSTALLATION

(43) Date of publication of application: 22.08.2018
(73) Proprietor: ABB Schweiz AG, 5400 Baden (CH)
(72) Inventor: Gutermuth, Georg, 69115 Heidelberg (DE); Hoernicke, Mario, 76829 Landau (DE)
(74) Representative: Bittner, Peter

(56) References cited:
- HOERNICKE MARIO ET AL: "Virtual plants for brown-field projects", 2015 IEEE 20TH CONFERENCE ON EMERGING TECHNOLOGIES & FACTORY AUTOMATION (ETFA), IEEE, 8 September 2015 (2015-09-08), pages 1-8, XP032797386, DOI: 10.1109/ETFA.2015.7301462 [retrieved on 2015-10-19]

## Description

### Technical Field

The present invention generally relates to electronic data processing, and more particularly, relates to computer systems and methods for generating plant topology data structures based on plant operating (operations) data.

### Background

Plant topology models represent the relationships between different plant items e.g. pumps, tanks, pipes, sensors, actuators, etc. Typically, a relationship is represented by a product connection (material flow: pump, flow meter, etc.), an energy connection (energy flow: heater, thermo-coupling connection, compressor, pressure connections, etc.) and/or signal connections (information flow: controller, data bus, wireless connection, etc.). The resulting graphs of such connections or flows can provide inputs to the execution of certain configuration methods of an automation system of the respective plant, such as for example, methods for increasing plant up-time or decreasing cost of poor quality (COPQ) during engineering. The term "plant" as used herein refers to plants for continuous (process) production as well as to factories for discrete manufacturing.

Existing configuration algorithms for automation systems are often based on plant topology models. Typically, such algorithms require that the plant topology is present in a computer interpretable format. In other words, an existing plant topology data structure is a prerequisite for the application of such configuration algorithms. Examples for such algorithms include the detection of first up alarms (cf. PCT application WO 2015131916 A1), alarm grouping (cf., L. Dubois, J.-M. Forêt, P. Mack, L. Ryckaert, "Advanced logic for alarm and event processing: Methods to reduce cognitive load for control room operators", in: 11th IFAC,IFIP,IFORS,IEA Symposium on Analysis, Design, and Evaluation of Human-Machine Systems (2010); Markus Schleburg., "Reduction of alerts in automated systems based on a combined analysis of CAEX plant models and associated alarm logs", Master Thesis Helmut-Schmidt-Universität Hamburg, 2011), or anomaly analysis in flow networks (A. Zakharov, V.-M. Tikkala & S.-L. Jämsä-Jounela, "Fault detection and diagnosis approach based on nonlinear parity equations and its application to leakages and blockages in the drying section of a board machine", Journal of Process Control, 2013).

However, in many existing plants the respective plant topologies are not available in computer readable format. Often process engineering fails to provide process and instrumentation diagrams (P&ID) in a computer readable format. Especially in older existing plants, the P&ID is usually not existing in electronic format and the paper versions may not be accurate as they may not be up-to-date with regards to modifications to the plant applied after the initial P&ID generation. In other words, many plants, as of today, do not have a computer readable plant topology data structure. The standard was and often still is a paper version of the P&ID. Changes to the plant topology are manually captured as changes (red-lining) to the paper, if captured at all.

In cases where a plant topology model is available, it was typically created during the engineering phase. For example, the P&ID is a common outcome of the process engineering and an input providing the basis for the automation engineering and configuration. Typically, the P&ID is created using CAD tools and in some cases the object model is passed to the automation engineering in computer interpretable forms (like XML) rather than only as a paper print-out. In some plants the effort is undertaken to manually create a plant topology for the purpose of a plant model, e.g. for model predictive control or plant operator training simulators. Such a manual creation is time-consuming and error prone. More modern approaches of obtaining a computer-model of the plant topology interpret the automation engineering results, such as control object models and the operator graphic (cf., Mario Hoernicke, Alexander Fay, Mike Barth, "Virtual plants for Brown-Field Projects - Automated generation of simulation models based on existing engineering data", IEEE Emerging Technologies and Factory Automation 2015, Luxemburg), or to create topology models from paper, by doing an optical symbol recognition (Esteban Arroyo, Alexander Fay, Mario Hoernicke, Pablo Rodriguez, "Digitalisierung grafischer Engineering-Dokumente mit Hilfe optischer Erkennung und sematischer Analyse als Grundlage für die Modernisierung bestehender Anlagen", Automation 2015, Baden-Baden).

To summarize, the prior art solutions are either created during engineering or in a separate manual process. Known drawbacks of the prior art solutions include:
- The plant topology is not present in a computer readable and interpretable form and thus all the automatic improvement and optimization methods cannot be used.
- The plant topology is created manually with high effort and sometimes low quality because of poor quality of the input information.
- The topology model is created during engineering and does not reflect the current status of the plant, including modifications and extensions that have not been updated.
- The topology model is based on a vendor-specific format (the operator screens of a specific process control system)

### Summary

There is therefore a need to improve the generation of plant topology data of a plant to reflect the current technical state of the plant with a high level of accuracy while the plant is in operation. This technical problem is addressed by computer systems, methods and computer program products representing different aspects of the present invention as described in the independent claims by generating a plant topology data structure from operations data and predefined rules. That is, various embodiments of the invention relate to a method for creating a plant topology data structure based on operating data created during operation of a plant by the process control system (PCS).

Thereby, the plant topology data structure reflects at least a portion of the entire plant topology.

The various embodiments process plant operation data (online and/or historic operating data) generated by control objects operated in the plant, and construct the plant topology data structure with data records in a computer interpretable format containing the graphs of product/material and energy connections between plant components operated in the plant. The term "control object" as used herein includes sensors, actuators and any data pre-processing component which are under control of an automation system. The term "plant component" includes any component which can be active to contribute to the functioning of the plant operations (including the control objects). The generated plant topology data structure can be used by existing algorithms to improve plant performance, quality, output, analysis and security. It may be further used to construct a visualization of a plant topology for a plant operator reflecting the current technical state of the plant to allow the operator to monitor the technical state and take corrective action when required.

The embodiments disclosed in the following are applicable to plants for any type of industrial production (continuous, batch or discrete). They are independent of the automation system hardware (e.g., the type of a distributed control system DCS) or the specific domain because respective hardware or domain specific rules are provided accordingly. Therefore, the embodiments can be used in all running plants, like for example in Oil & Gas or Power production.

In one embodiment, a computer system is provided for generating a plant topology data structure from operating data created by at least a subset of control objects of an automation system during plant operation. The plant topology data structure reflects at least a portion of the plant topology of the entire plant. The system has a so-called tag list with a list of signals associated with at least the subset of control objects. In other words, the tag list includes all kinds of signal types which can be generated by the subset. Signals of control objects of an automation system are generally referred to as tags. For each tag, (i.e. for each signal of said control objects), the tag list includes at least a component identifier and a type of the respective control object transmitting the signal. The tag list may be provided by the automation system which typically has a list of all of the signals (tags) which need to be published to become available for the computer system. Alternatively, the tag list may be received from an operator in the form of a computer readable format (e.g., a table format generated by a standard office software product). Optionally, the tag list may include meta-data being used for the identification of particular control objects. For example, such meta-data can be naming conventions for the signals indicating the respective control objects from where the signals originate. A widely used example is the so-called KKS naming convention (Kraftwerk Kennzeichensystem) for power plants. A person skilled in the art may also use other codings as meta-data for improving the identification of the respective control objects, such as for example number codes, hierarchical structure codes, physical unit descriptions, functional descriptions, etc.

The system has an interface module to receive operating data from said control objects. The operating data represent a plurality of different operating states of the plant operation. For example, operating data about the technical state of a flow production system may include data about the current state of pumps, valves and flow meters. The person skilled in the art knows the relevant technical parameters of respective plants. These parameters represent the technical state of components or sub-systems of the plant or even of the entire plant. The operating data may be received online during the operation of the plant or may be received from a storage device which stores historic operating data from the past.

The system further includes a rule engine which applies two rule sets. A first rule set is applied directly to the received operating data. The first rule set includes rules configured to identify a plurality of object clusters including connected control objects by deriving, from the received operating data, correlations between said connected control objects . The derived correlations are indicative of a real-world coupling of the respective connected control objects. In other words, the derived correlations indicate dependencies between control objects which can be explained if a corresponding connection exists between the correlated objects. The rules of the first rule set reflect such dependencies and allow the system to identify such connected control objects. Correlations may be positive when a characteristic measure for a first control object changes in the same direction as a characteristic measure of a second control object (i.e., both are increasing or both are decreasing), or they may be negative when the characteristic measure for the first control object changes in the opposite direction to the characteristic measure of the second control object (i.e., one is increasing and the other is decreasing). The term "real-world-coupling" as used herein includes material flow based coupling, energy flow based coupling, and information flow based coupling. For example, if the operating data shows that, over a given period of time, a particular flow meter always measures a flow once a particular pump is switched on and measures no flow when the pump is switched off, a corresponding rule recognizes that this particular pump is connected with the particular flow meter. This example corresponds to material flow based coupling. Further examples will be discussed in the detailed description. The first rule set may include steady-state rules to evaluate operating data generated during continuous flow operation of the plant, and may further include change-state rules to evaluate operating data generated in response to a change of the operating state of the plant.

A second rule set is applied to the identified plurality of object clusters. The second rule set is configured to select one consistent connection scenario from one or more alternative connection scenarios. In other words, once object clusters are identified by the first rule set, the second rule set can identify consistent combinations of the object clusters as further object clusters by identifying connected control objects belonging to at least two object clusters and combining the at least two object clusters accordingly. In other words, once a particular control object is identified in more than one object cluster the respective object clusters have an overlap (i.e., the particular control object). As a consequence, the respective object clusters can be combined in a larger combined object cluster which includes the particular control object only once but which includes the remaining connected control objects and the corresponding connections of said object clusters. Detailed examples are discussed in the detailed description.

The system further has a generator module to generate, for the selected connection scenario, representations of the respective (connected) control objects, and representations of the connections between the control object representations. Such representations are stored in the plant topology data structure. In an initialization step, the generator may generate the plant topology data structure first before storing the representations. However, the plant topology data structure may already exist as an empty data structure.

Once a portion of the plant topology is constructed by selecting a consistent connection scenario, further portions of the plant topology may be constructed by iteratively repeating the previously disclosed steps for further operating data. This results in generating an overall plant topology data structure as far as derivable from the available operating data (i.e. only covering plant states reflected in the received operating data).

The generated plant topology data structure may then be used as input for various functions of the automation system to improve efficiency, output, uptime or safety of the plant, such as for example:
- alarm grouping (providing technical state information to the plant operator for reducing plant down-time and to increase operator reaction reliability on unusual situations enabling faster reactions on unusual situations),
- evaluation of first-up alarms (providing technical state information to the plant operator for reducing plant down-time and to increase operator reaction reliability on unusual situations enabling faster reactions on unusual situations),
- anomaly analysis in flow networks (e.g., providing enhanced leakage detection), and
- generation of asset management functions (reduced manual effort for the creation of asset monitors making asset monitors usable for more users).

In other words, the generated plant topology structure can be seen as a configuration file for the automation system to enable the automated execution of said and other functions.

In one embodiment, a computer implemented method is provided for generating a plant topology data structure from operating data created by at least a subset of control objects of an automation system during plant operation, the plant topology data structure reflecting at least a portion of the plant topology. The method may be performed by the previously disclosed computer system. The method includes the steps: obtaining a list of signals generated by at least the subset of the control objects operated in the plant wherein the list includes at least a component identifier and a type for each signal of said control objects; receiving operating data from at least a subset of said control objects wherein the operating data represents a plurality of different operating states of the plant operation; applying a first rule set to the received operating data wherein the first rule set includes rules configured to identify a plurality of object clusters including connected control objects by deriving, from the received operating data, correlations between said connected control objects, the correlations being indicative of real-world coupling of the connected control objects within the respective object clusters; iteratively applying a second rule set to the plurality of object clusters wherein the second rule set is configured to identify consistent combinations of the object clusters as further object clusters by identifying connected control objects belonging to at least two object clusters and combining the at least two object clusters in accordance with one or more rules of the second rule set; and generating, in the plant topology data structure, for the selected connection scenario, representations of the respective connected control objects, and representations of the connections between the control object representations.

In one embodiment, a computer program product is provided for generating a plant topology data structure from operating data. The computer program product has programmatic instructions that when loaded into a memory of a computing device and executed by at least one processor of the computing device execute the steps of the herein disclosed computer-implemented method and implement the functions of the herein disclosed computer system.

Further aspects of the invention will be realized and attained by means of the elements and combinations particularly depicted in the appended claims. It is to be understood that both, the foregoing general description and the following detailed description are exemplary and explanatory only and are not restrictive of the invention as described.

### Brief Description of the Drawings

FIG. 1 shows a simplified block diagram of a computer system for generating a plant topology data structure from plant operating data according to an embodiment;
FIG. 2 is a simplified flowchart of a computer-implemented method for generating a plant topology data structure from plant operating data according to an embodiment;
FIGs. 3A, 3B, 3C show tables illustrating the results of applying rule sets according to an embodiment;
FIG. 4A shows example representations of actuators and sensors;
FIG. 4B is an example of a portion of an actual plant topology;
FIGs. 5 to 13 show examples of object clusters at different stages of plant topology data structure generation according to an embodiment; and
FIG. 14 is a diagram that shows an example of a generic computer device and a generic mobile computer device, which may be used with the techniques described here.

### Detailed Description

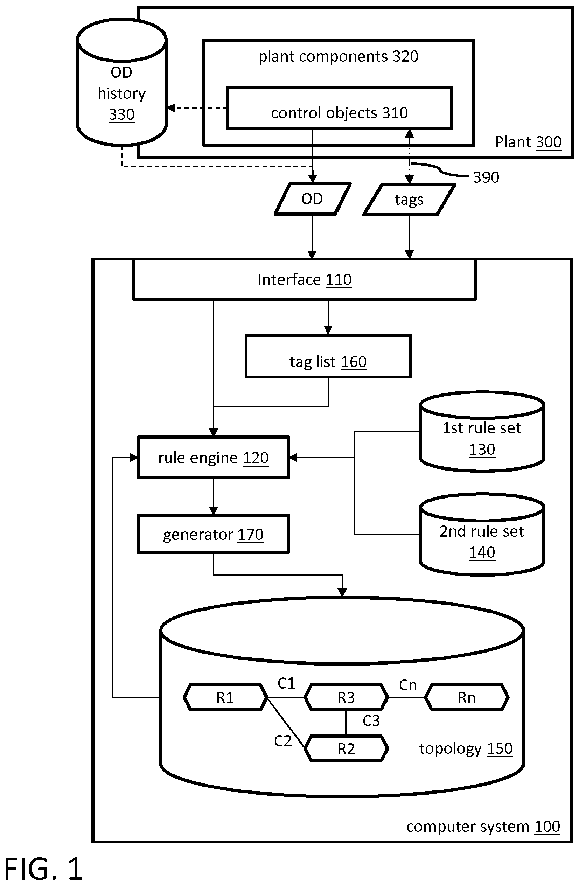

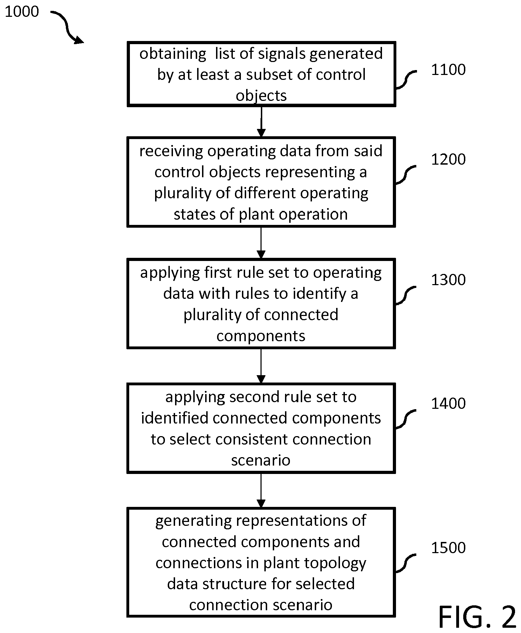

FIG. 1 shows a simplified block diagram of a computer system 100 for generating a plant topology data structure 150 from plant operating data OD according to an embodiment. FIG. 2 is a simplified flowchart of a computer-implemented method 1000 for generating the plant topology data structure according to an embodiment. FIG. 1 will be described in the context of FIG. 2 and the following description, therefore, refers to reference numbers of FIG. 1 and FIG. 2.

The computer system 100 is communicatively coupled with control objects 310 of an automation system for operating plant 300 via the interface module 110. The control objects 310 typically include sensors and actuators but may also include any kind of data pre-processing components. The plant may also include further plant components 320 which are not control objects. For example, a tank is an example of such a further plant component. The control objects provide operating data (or operations data) which are typically indicative of the technical state of the respective control object. In some cases the operating data may also be indicative of the technical state of a further plant component. For example, a level meter sensor value may be indicative of the filling level of the tank. The operating data OD is received 1200 by computer system 100 via the interface module 110. Thereby, the operating data OD may be received online directly from the control objects 310 during the operation of the plant 300. Alternatively, a storage device 330 may be used to record operating data OD and provide the historic (recorded) data OD to the interface module 110. The storage device can be part of the plant 300 or it may be a remote storage computer (e.g., a cloud server). Any known interface technology may be used which allows for data exchange between control objects 310/storage device 330 and the computer system 100.

The tag list 160 stores a list of the signals (tags) of at least such control objects which provide or have provided operating data OD to be used for the generation of the plant topology data structure 150. Together with each signal the corresponding control object and its respective type is stored. The association between tags and the respective control objects is illustrated by the dashed-dotted double sided arrow 390. The information for the tag list is typically known in the automation system of the plant 300 and can be retrieved from there via the interface 110. Alternatively, the information may be provided in electronic files with an appropriate file format (e.g., as a spreadsheet, a database table, or as an XML file). Obtaining 1100 the tag list 160 of signals generated by at least a subset of control objects from the respective data source can be seen as an initialization step. Thereby, the subset includes at least such control objects which provided operating data during a period of time which is selected for the construction of the topology data structure 150. By using the information from the tag list for each received signal of the operating data OD, the system can determine the respective control object and its type. This mapping function may be implemented in a separate module (not shown) or it may be implemented as a function of the rule engine 120.

In the illustrated embodiment, the received operating data OD and the tag list are provided as inputs to the rule engine 120 to perform this mapping function. The rule engine 120 can then apply two sets of rules: the first rule set 130 and the second rule set 140. The first rule set 130 is directly applied 1300 to the received operating data and includes rules to identify a plurality of object clusters. The first rule set 130 can include logical rules that may be domain or even project specific. The first rule set detects correlations between the operating data of control objects. If a correlation is detected it is an indicator that a material connection, an energy connection or an information connection exists between two control objects showing such correlation. Control objects showing such a correlation (i.e., having a connection) are referred to as connected control objects within an object cluster herein. The results of the application of the first rule set to the operating data are typically chains of (connected) control objects where sometimes the order is not 100% fixed. There may be control objects in the plant which do not appear in a chain because they had no impact on the received operating data. For example, an open valve that did not influence the process at all during the monitoring period for the operating data cannot be identified by the system and is therefore not included in the respective chain of control objects. As already mentioned, the first rule set can be applied to historic operating data as well as to online operating data during normal plant operation or other operation modes (e.g., maintenance mode). Some rules can recognize correlations for "steady state" operation, other rules can recognize a "state change" in the plant operation and inspect the response of the plant operation. The application of the first rule set can be seen as a learning period where the result is a set of object clusters. It is advantageous to select a monitoring period for the learning phase where operating data is received from a plurality of operation modes of the plant. Control objects of the plant that have never been used during the monitoring time period cannot be identified (e.g., control objects of an emergency cooling system during normal operation). To summarize, the application of the first rule set 130 to the received operating data OD results in a set of object clusters where every control object included in one or more of the object clusters was used at least once during the monitoring period.

The rule engine 120 can apply 1400 the second rule set to the identified plurality of object clusters in parallel to the identification step of the object clusters (as soon as some object clusters have been identified) or sequentially after the first rule set processing is finished. The second rule set has rules to check if some control objects are included in multiple object clusters. If a control object is part of at least of a first and a second object cluster it can be seen as a merging anchor for combining the first object cluster and the second object cluster. In such a case the second rule set 140 merges the first and second object clusters around the merging anchor by consistently adding all connected control objects of the first and second object clusters to the combined object cluster. Further, the second rule set 140 has consistency rules to reason about the order of control objects. Further, it may include consistency rules to reason about the existence of intermediate control objects (control objects not active or without impact during the monitoring period). To summarize, the second rule set 140 can validate the consistency of combinations of object clusters identified by the first rule set for different sets of operational data at different points in operation time, and finally select one consistent connection scenario from one or more alternative connection scenarios. In other words, the second rule set is configured to combine the object clusters identified by the first rule set into the overall (at least partial) topology.

The application of the second rule set 140 can be triggered by various events or conditions:
1. It may be triggered every time when a new object cluster is identified.
2. It may be triggered every time when a control object which is already part of an object cluster is identified in a further object cluster. The second trigger is more efficient than the first trigger because it only occurs when a new connection needs to be generated.
3. It may be triggered at predefined time points (e.g., at regular intervals).
4. It may be triggered on a user request (e.g., a request of an operator or system engineer).

The generator 170 then generates 1500 for the selected connection scenario representations R1 to Rn of the respective control objects and representations C1 to Cn of the connections between the control object representations in the plant topology data structure 150. For example, the representations R1 to Rn may be IDs of the respective connected control objects and/or plant components which have been identified as belonging to object clusters. Connection representations C1 to Cn may be implemented as corresponding relationships between connected control objects (e.g., parent-child relations). In one embodiment, the object representations R1 to Rn may include graphical symbols for the respective control objects/plant components and the connection representations C1 to Cn may include graphical connection elements (e.g., lines) allowing to generate a graphical visualization of at least a partial plant topology based on the representations stored in the plant topology data structure 150. Such a graphical visualization provides a snapshot of the technical plant operation state to a plant operator or to a system engineer of the automation system who can then take corrective action if the technical state indicates a corresponding need. In other words, the generated topology data structure can be used for monitoring the technical state of the plant based on operating data, either by enabling the application of automated algorithms as disclosed earlier (e.g. alarm grouping, evaluation of first-up alarms, anomaly analysis in flow networks, etc.), or by providing to a user a presentation of the topology reflecting the technical state of the plant for monitoring and taking corrective actions if required.

The disclosed method steps may be iteratively repeated for multiple monitoring intervals. This can improve the completeness of the topology data structure by capturing operating data in additional plant operation modes leading the collection of additional object clusters which may have been silent/unused during earlier monitoring intervals.

In one embodiment, the computer system 100 may receive inputs from a user (e.g., operator, system engineer), for example in response to presenting a graphical visualization of the topology, to solve potential ambiguities which cannot be resolved by the first and second rule sets.

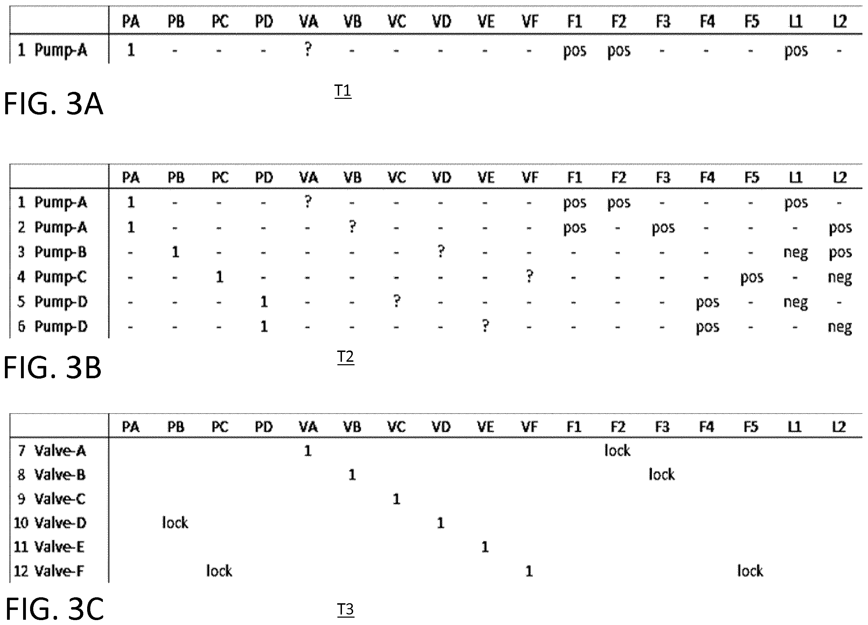

FIGs. 3A, 3B, 3C show tables T1, T2, T3 which illustrate the previously disclosed method by way of a particular example of a flow production plant. The tables show results of applying the rule sets by the rule engine. The first column of each table includes control objects for which correlations with other control objects are analyzed. Each of the other columns represents the results of the correlation analysis of the control object in the first column with the respective control objects as indicated in the header row of the respective table.

In the example, operating data (tags) are received from a plurality of control objects in the plant. The example may refer to a sub-unit of a (continuous) process industry plant. The tag-list includes actuators interacting with the process automation system:
- Pumps: PA, PB, PC, PD
- Valves: VA, VB, VC, VD, VE, VF
and further includes sensors interacting with the process automation system:
- Flow meters: F1, F2, F3, F4, F5
- Level meters: L1, L2.

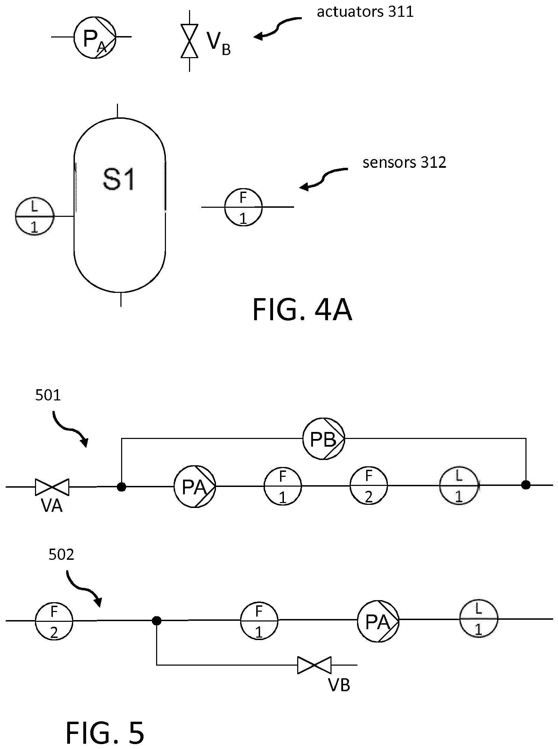

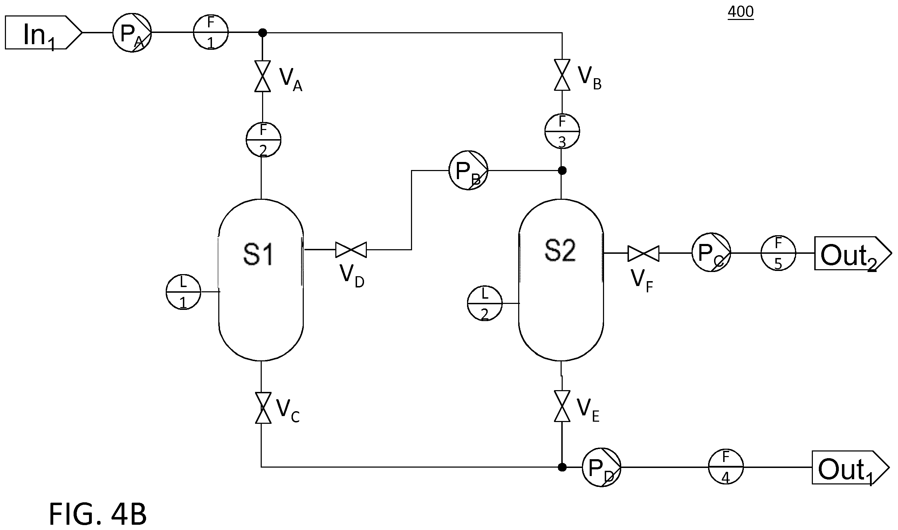

Turning briefly to FIG. 4, examples for graphical symbols of actuators 311 and sensors 312 are shown. It is to be noted that level meters (e.g., L2) in this example are always associated with a tank (e.g., tank S1). Such symbols may be used to render a visual presentation of the connected control objects in the topology data structure.

In this example, all control objects, with the exception of level meters, have two connections. A level meter sensor that is always connected to some kind of storage which can have more than two connections. In the example, level meter L1 is connected with tank S1.

Furthermore the naming convention (being meta-data) can give hints for a sub-structuring of a plant. For example, the control objects of one functional unit may have certain parts of their names in common (e.g., tempering system (H), distillation column (C), separation unit (S), feed water (FW), ...). This can help to sub-divide the plant into separate sections that can be analyzed separately. For simplicity it may be advantageous to start with the identification of object clusters for a small sub-unit and later on connect the results of multiple sub-units.

FIG. 4B shows a portion 400 of an actual plant topology which includes a plurality of control objects represented by symbols in accordance with FIG. 4A. In the example, the control objects are connected through material flow connections and provide operating data to the computer system to which the rules of the first rule set are applied by the rule engine. A task of the computer system is to generate a plant topology data structure from the received operating data which comes as close as possible to the actual plant topology portion 400.

Turning back to FIG. 3A, table T1 shows the result of applying a rule of the first rule set to the operating data received from the actuators and sensors to identify correlations of the pump PA (Pump-A) with the other control objects. In general, when a pump is switched on or off, the effect can often be seen at a plurality of measurement points. Only sensors that show an effect (i.e. a response to the pump switch in their technical state) may have a "direct" connection to the pump in the current configuration. In this example, it is assumed that the sensor values of F1, F2 and L1 increase (pos) when pump-A is switched on (e.g., linear increase with the rotation speed of the pump), but no other changes are indicated by the operating data (e.g., by other sensors). Respective rules of the first rule set therefore identify PA, F1, F2 and L1 as connected control objects of a corresponding object cluster.

Furthermore it is assumed that, except for valve VA, all other valves VB to VF are closed and, except for pump-A (PA), all other pumps PB to PD are off. A respective rule of the first rule set can therefore determine that only valve VA may be in a "direct" connection with pump PA. No other valve or pump can be in a "direct" connection with pump PA, as they would block the flow. As a result, the connection between PA and VA is marked as potentially possible (illustrated by "?").

The rules of the first rule set are configured to identify the following correlations based on the received operating data:
- The control objects F1, F2, L1 and PA can only be in a linear chain (due to mass continuity).
- Pump PA transports material in the direction of L1 (due to positive correlation detected by the first rule set) - in other words, in the direction of the inlet flow of storage S1 (where L1 is attached).
- L1 and the attached storage S1 can only be at the end of the chain. If it would be "upstream", then either the Level could not rise or the control objects behind would not get enough flow.
- No other pump or valve (apart for PA and VA) can be present in the linear chain (due to blocking).

A person skilled in the art can derive the respective rules of the first rule set from the description of the above example scenario. Dependent on the set up of a particular plant further appropriate rules for identifying correlations in the received operating data can be defined by the skilled person.

In the example, the following uncertainties remain based on the correlation analysis:
- Valve VA may or may not be present in the linear chain of the identified object cluster.
- The order of the control objects can be different (apart for PA always pumping in the direction of L2 at the end).
- There may be branches at different places that may or may not return to the chain.

As a consequence, there remain still different options for the identified object cluster.

FIG. 5 shows two possible example options 501, 502. The first option 501 includes a linear chain of the control objects PA, F1, F2 and L1. Thereby, F1 and F2 could also be in reversed order. VA is included also as a valve controlling the input of pump PA. It is to be noted that the applied rules do not allow for a final conclusion about whether VA belongs to this object cluster. Further, the first option 501 shows a second pump PB in a bypass branch to the first identified object cluster. Basically any control object for which no correlation was found with pump PA could be placed on such a bypass branch.

The second option 502 includes the pump PA next to the level meter L1. The flow meters F2 and F1 are positioned on the input side of pump PA. Valve VB is shown on a bypass branch. The skilled person understands that after the initial application of the first rule set to the received operating data showing the correlations as described by table T1 (cf. FIG. 3A), a high number of possible options can be constructed for the arrangement of the control objects in the object cluster.

Turning now to FIG. 3B, table T2 includes the results of the correlation analysis with the first rule set applied to all pumps included in the tag list. Row 1 is identical to row 1 of T1 in FIG. 3A. Row 2 relates to a second operating mode of PA. In the second operating mode VA is closed and VB is open. The correlation result of row 2 indicates that pump PA is also a member of a second object cluster including the control objects PA, F1, F3 and L2. In the example, the uncertainty that VB may or may not be included in the second object cluster is similar to the situation in FIG. 3A with regards to VA.

Row 3 of T2 relates to pump PB while VD is open. A positive correlation is detected with L2 and a negative correlation with L1. A negative correlation in this context means that the operation of PB leads to a reduced filling level measured by L1 which implies that PB pumps material from a storage associated with L1 to a storage associated with L2. A third object cluster therefore includes the control objects PB, L1, and L2 with uncertainty for VD.

Row 4 of T2 relates to pump PC which shows a positive correlation with F5 and a negative correlation with L2 while valve VF is open. A fourth object cluster therefore includes the control objects PC, F5, and L2 with uncertainty for VF.

Row 5 of T2 relates to a first operation mode of pump PD which shows a positive correlation with F4 and a negative correlation with L1 while valve VC is open. A fifth object cluster therefore includes the control objects PD, F4, and L1 with uncertainty for VC.

Row 6 of T2 relates to a second operation mode of pump PD which shows a positive correlation with F4 and a negative correlation with L2 while valve VE is open. A sixth object cluster therefore includes the control objects PD, F4, and L2 with uncertainty for VE.

Rule for normal flow scenarios allow to derive from a (non-changing) steady state operation certain information about how to connect objects together if clear correlations between them can be found. This is further elaborated by examples of valve/flow sensor pairs and valve/pump pairs. A person skilled in the art can design further rules related to other pairs of control object types.

### Valve/flow sensor pair:

If a valve/flow-sensor pair is identified for which no flow is measured when the valve is closed, but sometimes (or always) a flow is measured when the valve is open a corresponding rule of the first rule set determines that the valve/flow sensor pair belongs to an object cluster.

### Valve & pump pair:

Similarly a connected valve/pump pair can be detected by a rule of the first rule set when the pump only operates while the valve is open. This can be implemented in the interlock logic of the pump.

FIG. 3C shows an interlock table T3 for normal operation with the detected lock correlations between valves and flow sensors or pumps. In the example, row 7 reflects the connection of VA and F2, row 8 the connection between VB and F3, row 10 the connection between VD and PB, and row 12 the connections between VF and PC/F5.

The above presented example relates to a material flow connection scenario. The person skilled in the art can define rules of the first rule set to identify correlations between control objects also for energy flow or information flow scenarios. For example, an energy flow related rule in relation to heater actuators may be: when a heater is switched on, the temperature sensors that indicate increasing temperature have a connection to the heater. A further energy flow related rule in relation to compressor actuators may be: when a compressor is switched on, the pressure sensors that indicate rising pressure have a connection to the compressor. For example, an information flow related rule in relation to a light barrier sensor may be: when a light barrier indicates presence of an object and immediately a conveyor belt is started or stopped the light barrier sensor has an information (logical) connection to the conveyor belt. A further example for an information flow related rule in relation to a level meter sensor may be: when a level meter indicates reaching a limit and shortly after, a pump is switched off and/or a valve is closed the level meter has a logical connection with the pump.

The description now continues with the above material flow based example scenario which can be extended by a skilled person to also cover the correlation of operating data regarding energy flow/information flow scenarios accordingly. In the following it is disclosed by way of example how the object clusters identified by the first rule set can now be combined to generate the overall plant topology data structure. This combination of object clusters is achieved by applying the second rule set to the identified object clusters.

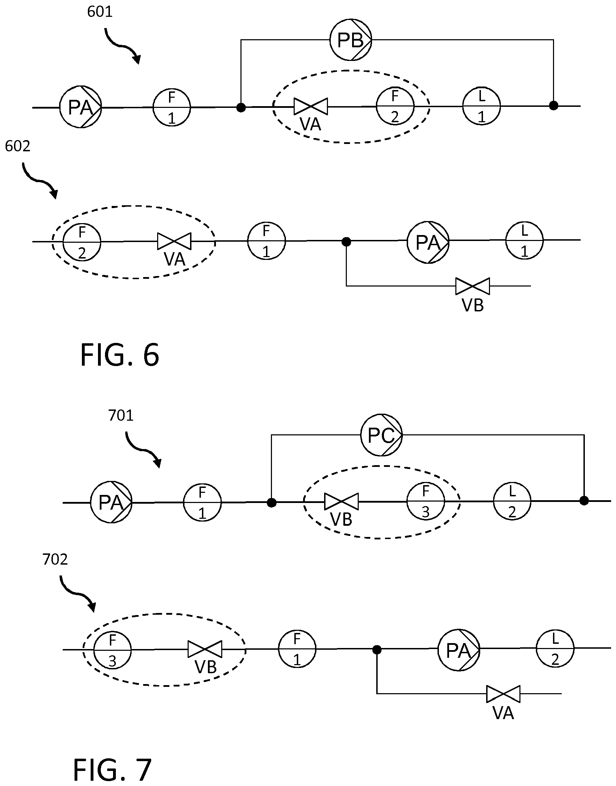

A rule of the second rule set can use the information of row 1 of T2 (cf. FIG. 3B) and row 7 of T3 (cf. FIG. 3C). From this information the rule can derive that VA can lock F2 (row 7) if being present in the object cluster resulting from row 1, either directly before or after F2. FIG. 6 shows two possible options 601, 602 with possible branches. In the first option 601, VA is placed in front of F2 and in the second option 602 VA is placed behind F2 as can be seen in the areas highlighted by the dashed ellipses. After the combination of the respective object clusters, a combined object cluster includes VA with certainty next to F2 but with an uncertain order. Note that after the application of the first rule set it was uncertain whether VA is included or not. Both options 601, 602 are possible alternatives for a consistent combination of respective object clusters identified by the first rule set. A consistent combination is determined by the second rule set if the combination does not create any conflicts regarding the input/output interfaces of the identified object clusters when being merged.

A similar result is achieved when using the information of rows 2 (second operation mode of PA) and 8 (lock VB/F3). FIG. 7 shows two possible options 701, 702 as the result of the combination of the object clusters resulting from the correlation information of rows 2 and 8 highlighting the areas where VB is now included with certainty next to F3. Note that after the application of the first rule set it was uncertain whether VB is included or not. Both options 701, 702 are possible alternatives for a consistent combination of respective object clusters identified by the first rule set. A consistent combination of object clusters results again in an object cluster which typically is more complex than the originally identified chain of control objects.

By applying the second rule set iteratively to object clusters which were obtained as combinations of the originally identified object clusters, more and more connections between respective control objects can be generated in the topology data structure until a predefined stop criterion with regards to the topology granularity is reached. For example, the stop criterion can be that all control objects (or a predefined percentage) known form the tag list have a representation in the combined object cluster of the latest iteration. Some control objects of a particular type may not be necessary for a useful plant topology. In such cases, the stop criterion may already be reached once all control objects having a type different from the particular type have a representation in the combined object cluster of the latest iteration. In one embodiment, a user may provide a termination instruction as the stop criterion in response to the visualization of the plant topology based on the latest iteration. For example, the results of FIG. 6 and FIG. 7 can be again combined into a larger combined object cluster. This combination results in a typical pattern for a branching situation: In the alternatives 601, 602, 701, and 702 for the combined object clusters, a rule of the second rule set recognizes that PA and F1 are present in both "branches", but the remaining control objects (601, 602: valve VA, flow sensor L1, level meter F2; 701, 702: valve VB, flow sensor L2, level meter F3) are not. As the pump PA gives a direction, a rule can conclude that PA and F1 are at the beginning of a combined object cluster and a branch is following.

A first rule may be "branching": If two object clusters have control objects in common, and, at the same time include sets of disjunctive control objects, then a branching situation is present. The two object clusters can be combined in the form:
(a) all common control objects lie on the common path,
(b) the disjunctive control objects lie on different branches, both connected at one point to the common patch.

A second rule may be "flow direction": If a control object is included in at least two object clusters, and if there is a positive correlation between a pump in one object cluster and a level meter in the other object cluster then it is determined that the second object cluster is downstream from the first one.

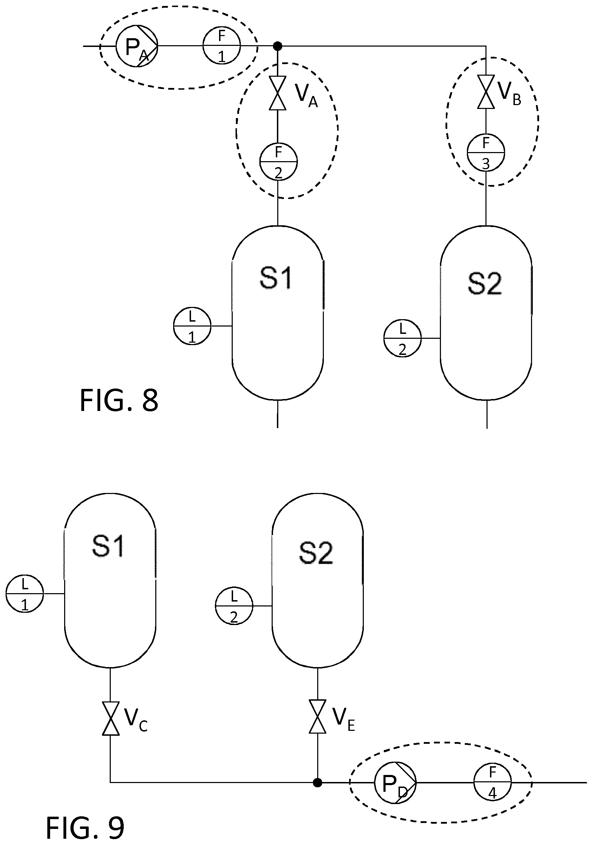

FIG. 8 shows a consistent combined object cluster as a result of merging the object clusters of FIG. 6 and FIG. 7 with a corresponding rule of the second rule set. FIG. 8 also includes the storage devices S1, S2 (e.g., tanks) associated with the level meters L1, L2 respectively. Again, the dashed lines illustrate control objects where the order remains uncertain. The consistent combination includes the pair of the control objects PA, F1 as the origin of a material flow which is pumped towards the tanks S1 and/or S2 via the control object pairs VA, F2 and/or VB, F3, respectively.

FIG. 9 shows a consistent combined object cluster derived from the two operating modes of pump PD illustrated by the correlations in rows 5, 6 of T2 (cf. FIG. 3B). The system answer to PD results again in a branching situation which is identified by a corresponding branching rule of the second rule set. In this example, there is a negative correlation between pump PD and the level meters L1, L2. That is, while the flow at F4 increases when pump PD is on, the levels measured by L1, L2 decrease. The correlations of VC, VE are however uncertain. The object clusters identified by the first rule set both include the pair of control objects PD, F4 but include different level meters L1, L2. Again, a corresponding branching rule of the second rule set determines that a consistent combination of the two object clusters includes the control object pair PD, F2 following the parallel branches of with tanks S1, S2 (L1, L2) where VC, VE can be part of the respective branches (cf. FIG. 9) according to the information given in rows 5 and 6. This rule application confirms the reasoning that PD must be an outlet pump to S1 and S2. The inverse is true for pump PA. It cannot follow L1/L2, as this would interfere with rows 5 and 6. PA is thus the inlet pump (cf. FIG. 8)

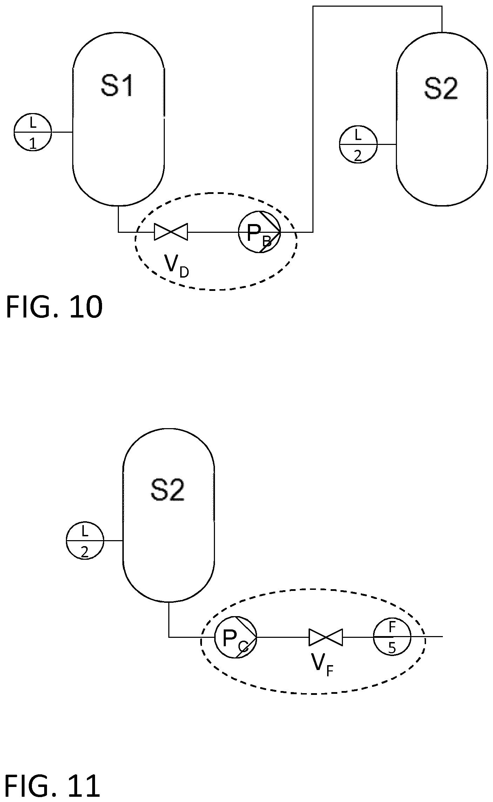

FIG. 10 illustrates the result of a rule of the second rule set which combines the correlation information of rows 3 and 10 (cf. T2 of FIG. 3B and T3 of FIG. 3C) about pump PB having a negative correlation (outlet) with L1 and a positive correlation (inlet) with L2. From row 10 the rule derives the presence of valve VD in combination with PB. Therefore, the combined object cluster includes the control object pair PB, VD (in unknown order between the tanks S1, S2 with a pumping direction from L1 (negative correlation) to L2 (positive correlation).

From the correlation information given in rows 4 and 12, a corresponding rule of the second rule set can combine the respective object clusters (chains) identified by the first rule set. Row 4 illustrates the positive correlation of pump PC with F5 and the negative correlation with L2. Row 12 provides that VF is locked with PC and F5. The corresponding rule of the second rule set derives from this information that, because L2 has a negative correlation to the flow at F5, the situation again corresponds to the outlet side of storage S2. However, the order of the control objects PC, VF and F5 is unknown as illustrated in FIG. 11.

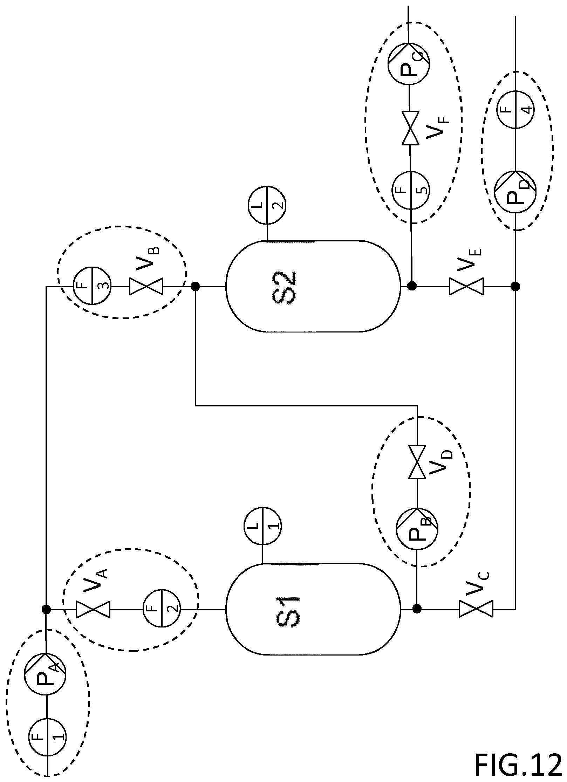

The combined object clusters of FIGs. 6 to 11 can now be further combined by corresponding rules of the second rule set to arrive at a consistent partial topology as illustrated in FIG. 12. For example, for this purpose the corresponding rules can identify control objects being included in multiple combined object clusters, or may identify further branches where needed. A possible result of a portion of a plant topology data structure generated based on operating data received from the respective control objects is illustrated in FIG. 12. Representations of the corresponding control objects and their connections are generated in the plant topology data structure accordingly. It is to be noted that the order of control objects within areas highlighted by the dashed lines remain unknown. However, this order is not relevant in detail because it is known that the respective control objects form functional pairs or groups of objects. Possible differences to the actual topology portion shown in Fig. 12 are limited to (a) the order of the control objects in in the highlighted areas, (b) the position of tank-connectors, and (c) the missing off-page connectors (In1, Out1, Out2, cf. FIG. 4B).

For most use-cases the exact order of the control objects within the dashed elliptic areas is of lower importance. However, the context of the control objects which can be derived through the application of the first and second rule sets as illustrated by previously disclosed material flow example may be relevant. The exact connector position of branches at the tanks cannot be derived either. Other positions of the additional outlet valve VD may be possible.

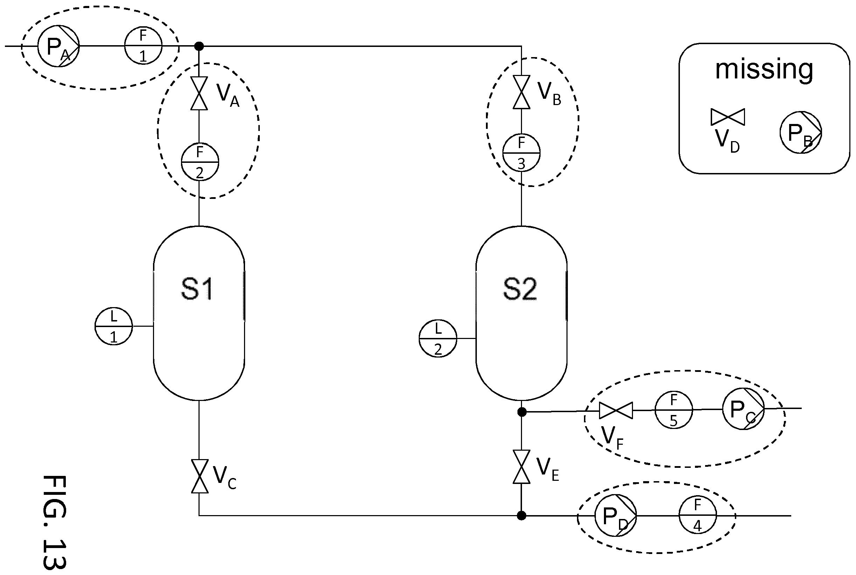

In case that the operating data would have been collected during a period where the branch PB - VD was never activated, the information given in rows 3 (related to pump PB) and 12 (related to valve VD) would not become available when applying the rules of the first rule set. In this case, no information about the control objects PB, VD can be concluded from the operating data because no correlations can be identified leading to a generated plant topology data structure including representations of the control objects as shown in FIG. 13. Pump PB and valve VD (shown as missing) are not represented as parts of the generated plant topology data structure. Nevertheless, the algorithm applying the first and second rule sets is relatively robust in this respect and can still lead to good results for a partial topology structure even in case of missing information.

Naming conventions representing a type of meta-data of tags may imply a subdivision of the plant into (functional) units, such as for example, mixer, grinder, feed-water inlet or boiler. In such embodiments, the meta-data can be used to cluster the control objects accordingly and initially generate the combined object clusters for the separate units. In a final step those units can then be connected by connecting the combined object clusters (e.g., by identifying control objects being present in multiple combined object clusters and/or by evaluating corresponding operating data to determine consistent connection options based on rules of the second rule set). For example, connections of two open ends of two combined components representing respective units may be identified by finding pairs of control objects showing the same or similar pressure behavior over time or by finding a correlation between a pump in one unit and a flow in another unit. This step of combining sub-topologies of units into a larger topology can be seen as a particular step of the iterative application of the second rule set to combined object clusters. This embodiment may be advantageous is that smaller sub-units are easier to resolve for generating the corresponding plant topology data structure entries. Therefore, the unit wise generation of combined components based on naming conventions associated with tags of the operating data saves computational power and computation time.

In one embodiment, the rules of the first rule set to identify object clusters based on the received operating data may include the use of statistical measures derivable from the operating data to increase the accuracy of topology generation. For example, a rule may compute a similarity measure between curves of similar control objects, such as for example, the flow curves of two flow meters. The computed similarity is then used to assess the correlation between the respective control objects which determines whether a direct connection is generated between the respective control objects or not. Examples of algorithms for similarity computation include but are not limited to "Eucledian distance" or "Dynamic time-warping". In another example, a rule may check whether a correlation between operating data occurs more often than a predefined threshold value (frequent occurrences measure). For example, it may check if the correlation of "pump on"/"valve open" occurs more than n times (n=predefined threshold value) to identify the correlation as a result of causality and not just by coincidence.

In one embodiment, hardware or process parameters may be derived from the observed operating data. For example, the maximum flow through a pump and flow meter can indicate a (minimum) value for the maximum pump volume or the diameter of the pipe. In another example, the maximum integral value of inflow - outflow of a storage (measured with a level meter) gives a lower boundary for the maximum volume of the storage. This additional information automatically obtained from the observed operating data can be added as meta data of the corresponding control objects or connections in the topology data structure.

In one embodiment, the computer system can prompt a user with the current state of the generated topology data structure via an appropriate graphical user interface. In response to the visualization to the user the system may receive from the user a confirmation of the derived topology data structure, or an instruction regarding a decision for a particular option out of a plurality of options, or an instruction for an amendment of the structure. The user response may be received as an input via a standard human interaction interface.

As already pointed out with the examples for rules applying to energy connections of information connections, the disclosed concept can also be applied to electrical subsystems (e.g., power distribution systems within process or manufacturing plants) or to IT networked subsystems (e.g., controllers, etc.). For example, when a breaker (switch) is closed and a motor starts or a current motor measurement increases, there is a correlation between the breaker and the measurement or the motor. In one embodiment, the generator can then generate a corresponding electrical single-line diagram (instead of the P&ID) using corresponding rule sets from the electrical domain applied to the corresponding electrical signal related operating data.

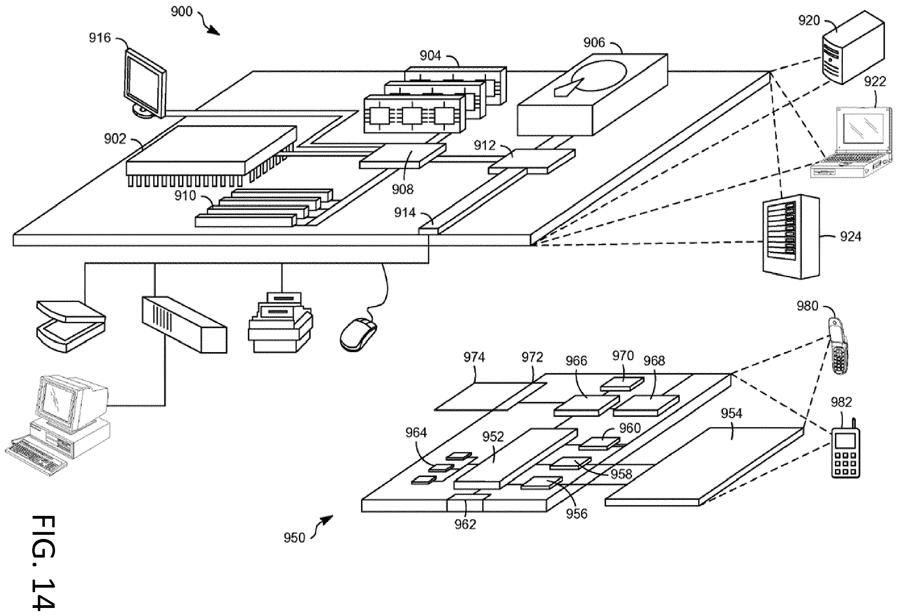

FIG. 14 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic computer device may 900 correspond to a computer system 100 as illustrated in FIG. 1. Computing device 950 is intended to represent various forms of mobile devices, such as personal digital assistants, cellular telephones, smart phones, and other similar computing devices. For example, computing device 950 may be used by an operator/user for interacting with the computer system 100. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processing units and/or multiple buses may be used, as appropriate, along with multiple memories and types of memory. Also, multiple computing devices 900 may be connected, with each device providing portions of the necessary operations (e.g., as a server bank, a group of blade servers, or a processing device).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processing units. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provided in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, EDGE, UMTS, LTE, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a backend component (e.g., as a data server), or that includes a middleware component (e.g., an application server), or that includes a front end component (e.g., a client computer having a graphical user interface or a Web browser through which a user can interact with an implementation of the systems and techniques described here), or any combination of such backend, middleware, or frontend components. The components of the system can be interconnected by any form or medium of digital data communication (e.g., a communication network). Examples of communication networks include a local area network ("LAN"), a wireless local area network ("WLAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the scope of the invention, as defined by the appended claims.

## Claims

1. A computer-implemented method (1000) for generating a plant topology data structure from operating data created by at least a subset of control objects of an automation system during plant operation, the plant topology data structure reflecting at least a portion of the plant topology, the method **characterised by** comprising the steps of:
obtaining (1100) a tag list (160) comprising a list of signals associated with at least the subset of control objects wherein the tag list includes at least a component identifier and a type for each signal of said control objects;
receiving (1200) operating data from said control objects wherein the operating data represents a plurality of different operating states of the plant operation;
applying (1300) a first rule set (130) to the received operating data wherein the first rule set includes rules configured to identify a plurality of object clusters including connected control objects by deriving, from the received operating data, correlations between said connected control objects, the correlations being indicative of a real-world coupling of the connected control objects within the respective object clusters;
iteratively applying (1400) a second rule set (140) to the plurality of object clusters wherein the second rule set is configured to identify consistent combinations of the object clusters as further object clusters by identifying control objects belonging to at least two object clusters and combining the at least two object clusters according to one or more rules of the second rule set;
generating (1500), in the plant topology data structure, for the object clusters,
representations of the respective connected control objects, and representations of the connections between the control object representations.

2. The method of claim 1, wherein the tag list is obtained from a list of signals of the automation system.

3. The method of claim 2, wherein the list of signals includes meta-data being used for the identification of particular control objects wherein the meta-data include any one of the following: names, units of measure, description, alarm-limits, and functional structuring.

4. The method of any of the previous claims, wherein the real-world coupling between two particular connected control objects corresponds to any one of the following couplings: material flow based coupling, energy flow based coupling, and information flow based coupling.

5. The method of any of the previous claims, wherein the first rule set includes steady-state rules to evaluate operating data generated during continuous flow operation of the plant, and further includes change-state rules to evaluate operating data generated in response to a change of the operating state of the plant.

6. The method of any of the previous claims, wherein the generated plant topology data structure is used as input for one or more of the following functions to improve efficiency, output, uptime or safety of the plant:
- alarm grouping,
- evaluation of first-up alarms, and
- anomaly analysis in flow networks.

7. A computer program product comprising instructions for generating a plant topology data structure (150) from operating data (OD) created by at least a subset of control objects (310) of an automation system during plant operation, the plant topology data structure reflecting at least a portion of the plant topology, the computer program product when loaded into a memory of a computing device and executed by at least one processor of the computing device is adapted to execute the steps of the computer-implemented method according to any previous claims.

8. A computer system (100) for generating a plant topology data structure (150) from operating data (OD) created by at least a subset of control objects (310) of an automation system during plant operation, the plant topology data structure reflecting at least a portion of the plant topology, the system **characterised in that** it comprises:
means for obtaining a tag list (160) comprising a list of signals associated with at least the subset of control objects wherein the tag list includes at least a component identifier and a type for each signal of said control objects (310);
an interface module (110) configured to receive operating data (OD) from said control objects (310) wherein the operating data represent a plurality of different operating states of the plant operation;
a rule engine (120) configured to:
apply a first rule set (130) to the received operating data (OD) wherein the first rule set includes rules configured to identify a plurality of object clusters including connected control objects by deriving, from the received operating data, correlations between said connected control objects the correlations being indicative of a real-world coupling of the connected control objects within the respective object clusters, and
iteratively apply a second rule set (140) to the identified plurality of object clusters wherein the second rule set is configured to identify consistent combinations of the object clusters as further object clusters by identifying connected control objects belonging to at least two object clusters and combining the at least two object clusters using one or more rules of the second rule set; and
a generator module (170) configured to generate, in the plant topology data structure (150), for the object clusters, representations (R1 to Rn) of the respective connected control objects, and representations (C1 to Cn) of the connections between the control object representations (R1 to Rn).

9. The system of claim 8, wherein the tag list is obtained from a list of signals of the automation system.

10. The system of claim 9, wherein the list of signals includes meta-data being used for the identification of particular control objects wherein the meta-data include any one of the following: names, units of measure, description, alarm-limits, and functional structuring.

11. The system of any of the claims 8 to 10, wherein the real-world coupling between two particular connected control objects corresponds to any one of the following couplings: material flow based coupling, energy flow based coupling, and information flow based coupling.

12. The system of any of the claims 8 to 11, wherein the first rule set includes steady-state rules to evaluate operating data generated during continuous flow operation of the plant, and further includes change-state rules to evaluate operating data generated in response to a change of the operating state of the plant.

13. The system of any of the claims 8 to 12, wherein the rule engine (120) and the generator (170) are further configured to:
iteratively generate further combined object clusters by combining, in accordance with the second rule set, combined object clusters having at least one control object in common.

14. The system of any of the claims 8 to 13, wherein the generator (170) is further configured to terminate the iterative generation of combined object clusters when a stop criterion is fulfilled, the stop criterion selected from the group of: all control objects associated with the tag list are included in a particular combined object cluster of the latest iteration; all control objects of one or more predefined object types are included in a particular combined object cluster of the latest iteration; and a termination instruction received from a user.

15. The system of any of the claims 8 to 14, wherein a particular rule of the first rule set to identify object clusters based on the received operating data includes the use of one or more statistical measures derivable from the operating data.

## Patentansprüche

1. Computerimplementiertes Verfahren (1000) zum Erzeugen einer Anlagentopologiedatenstruktur aus Betriebsdaten, die durch mindestens eine Untergruppe von Steuerobjekten eines Automatisierungssystems während eines Anlagenbetriebs erzeugt werden, wobei die Anlagentopologiedatenstruktur mindestens einen Teil der Anlagentopologie widerspiegelt, wobei das Verfahren **dadurch gekennzeichnet ist, dass** es die folgenden Schritte umfasst:
Erhalten (1100) einer Markierungsliste (160), die eine Liste von Signalen umfasst, die zumindest der Untergruppe von Steuerobjekten zugeordnet sind,
wobei die Markierungsliste mindestens eine Komponentenkennung und einen Typ für jedes Signal der Steuerobjekte enthält;
Empfangen (1200) von Betriebsdaten von den Steuerobjekten, wobei die Betriebsdaten mehrere verschiedene Betriebszustände des Anlagenbetriebs repräsentieren;
Anwenden (1300) einer ersten Regelgruppe (130) auf die empfangenen Betriebsdaten, wobei die erste Regelgruppe Regeln enthält, die konfiguriert sind, mehrere Objekt-Cluster, die verbundene Steuerobjekte enthalten, durch Ableiten von Korrelationen zwischen den verbundenen Steuerobjekten von den empfangenen Betriebsdaten zu identifizieren, wobei die Korrelationen eine Echtweltkopplung der verbundenen Steuerobjekte innerhalb der jeweiligen Objekt-Cluster angeben;
iteratives Anwenden (1400) einer zweiten Regelgruppe (140) auf die mehreren Objekt-Cluster, wobei die zweite Regelgruppe konfiguriert ist, konsistente Kombinationen der Objekt-Cluster als weitere Objekt-Cluster durch Identifizieren von Steuerobjekten, die zu mindestens zwei Objekt-Clustern gehören, und Vereinigen der mindestens zwei Objekt-Cluster gemäß einer oder mehrerer Regeln der zweiten Regelgruppe zu identifizieren;
Erzeugen (1500) in der Anlagentopologiedatenstruktur für die Objekt-Cluster von Repräsentationen der jeweiligen verbundenen Steuerobjekte und Repräsentationen von Verbindungen zwischen den Steuerobjektrepräsentationen.

2. Verfahren nach Anspruch 1, wobei die Markierungsliste von einer Liste von Signalen des Automatisierungssystems erhalten wird.

3. Verfahren nach Anspruch 2, wobei die Liste von Signalen Metadaten enthält, die für die Identifizierung bestimmter Steuerobjekte verwendet werden, wobei die Metadaten eines der Folgenden enthalten: Namen, Maßeinheiten, Beschreibung, Alarmgrenzen und eine funktionale Strukturierung.

4. Verfahren nach einem der vorhergehenden Ansprüche, wobei die Echtweltkopplung zwischen zwei bestimmten verbundenen Steuerobjekten einer der folgenden Kopplungen entspricht:
einer auf Materialfluss beruhenden Kopplung, einer auf Energiefluss beruhenden Kopplung und einer auf Informationsfluss beruhenden Kopplung.

5. Verfahren nach einem der vorhergehenden Ansprüche, wobei die erste Regelgruppe Regeln eines stabilen Zustands enthält, um Betriebsdaten zu beurteilen, die während eines Durchflussbetriebs der Anlage erzeugt werden, und ferner Änderungszustandsregeln enthält, um Betriebsdaten zu beurteilen, die als Reaktion auf eine Änderung des Betriebszustands der Anlage erzeugt werden.

6. Verfahren nach einem der vorhergehenden Ansprüche, wobei die erzeugte Anlagentopologiedatenstruktur als Eingabe für eine oder mehrere der folgenden Funktionen verwendet wird, um eine Effizienz, eine Ausgabe, eine Laufzeit oder eine Sicherheit der Anlage zu verbessern:
- eine Alarmgruppierung,
- eine Beurteilung von zuerst eintretenden Alarmen und
- eine Anomalieanalyse in Flussnetzen.

7. Computerprogrammprodukt, das Anweisungen umfasst, um eine Anlagentopologiedatenstruktur (150) aus Betriebsdaten (OD) zu erzeugen, die durch mindestens eine Untergruppe von Steuerobjekten (310) eines Automatisierungssystems während eines Anlagenbetriebs erzeugt werden, wobei die Anlagentopologiedatenstruktur mindestens einen Teil der Anlagentopologie widerspiegelt, wobei das Computerprogrammprodukt dann, wenn es in einen Speicher einer Rechenvorrichtung geladen und durch mindestens einen Prozessor der Rechenvorrichtung ausgeführt wird, ausgelegt ist, die Schritte des computerimplementierten Verfahrens nach allen vorhergehenden Ansprüchen auszuführen.

8. Computersystem (100) zum Erzeugen einer Anlagentopologiedatenstruktur (150) aus Betriebsdaten (OD), die durch mindestens eine Untergruppe von Steuerobjekten (310) eines Automatisierungssystems während eines Anlagenbetriebs erzeugt werden, wobei die Anlagentopologiedatenstruktur mindestens einen Teil der Anlagentopologie widerspiegelt, wobei das System **dadurch gekennzeichnet ist, dass** es Folgendes umfasst:
Mittel zum Erhalten einer Markierungsliste (160), die eine Liste von Signalen umfasst, die zumindest der Untergruppe von Steuerobjekten zugeordnet sind, wobei die Markierungsliste mindestens eine Komponentenkennung und einen Typ für jedes Signal der Steuerobjekte (310) enthält;
ein Schnittstellenmodul (110), das konfiguriert ist, Betriebsdaten (OD) von den Steuerobjekten (310) zu empfangen, wobei die Betriebsdaten mehrere verschiedene Betriebszustände des Anlagenbetriebs repräsentieren;
eine Regelmaschine (120), die konfiguriert ist zum:
Anwenden einer ersten Regelgruppe (130) auf die empfangenen Betriebsdaten (OD), wobei die erste Regelgruppe Regeln enthält, die konfiguriert sind, mehrere Objekt-Cluster, die verbundene Steuerobjekte enthalten, durch Ableiten von Korrelationen zwischen den verbundenen Steuerobjekten von den empfangenen Betriebsdaten zu identifizieren, wobei die Korrelationen eine Echtweltkopplung der verbundenen Steuerobjekte innerhalb der jeweiligen Objekt-Cluster angeben, und
iteratives Anwenden einer zweiten Regelgruppe (140) auf die identifizierten mehreren Objekt-Cluster, wobei die zweite Regelgruppe konfiguriert ist, konsistente Kombinationen der Objekt-Cluster als weitere Objekt-Cluster durch Identifizieren von verbundenen Steuerobjekten, die zu mindestens zwei Objekt-Clustern gehören, und Vereinigen der mindestens zwei Objekt-Cluster unter Verwendung einer oder mehrerer Regeln der zweiten Regelgruppe zu identifizieren; und
ein Generatormodul (170), das konfiguriert ist, in der Anlagentopologiedatenstruktur (150) für die Objekt-Cluster Repräsentationen (R1 bis Rn) der jeweiligen verbundenen Steuerobjekte und Repräsentationen (C1 bis Cn) der Verbindungen zwischen den Steuerobjektrepräsentationen (R1 bis Rn) zu erzeugen.

9. System nach Anspruch 8, wobei die Markierungsliste von einer Liste von Signalen des Automatisierungssystems erhalten wird.

10. System nach Anspruch 9, wobei die Liste von Signalen Metadaten enthält, die für die Identifizierung bestimmter Steuerobjekte verwendet werden, wobei die Metadaten eines der Folgenden enthalten: Namen, Maßeinheiten, Beschreibung, Alarmgrenzen und eine funktionale Strukturierung.

11. System nach einem der Ansprüche 8 bis 10, wobei die Echtweltkopplung zwischen zwei bestimmten verbundenen Steuerobjekten einer der folgenden Kopplungen entspricht:
einer auf Materialfluss beruhenden Kopplung, einer auf Energiefluss beruhenden Kopplung und einer auf Informationsfluss beruhenden Kopplung.

12. System nach einem der Ansprüche 8 bis 11, wobei die erste Regelgruppe Regeln eines stabilen Zustands enthält, um Betriebsdaten zu beurteilen, die während eines Durchflussbetriebs der Anlage erzeugt werden, und ferner Änderungszustandsregeln enthält, um Betriebsdaten zu beurteilen, die als Reaktion auf eine Änderung des Betriebszustands der Anlage erzeugt werden.

13. System nach einem der Ansprüche 8 bis 12, wobei die Regelmaschine (120) und der Generator (170) ferner konfiguriert sind zum:
iterativen Erzeugen weiterer vereinigter Objekt-Cluster durch Vereinigen in Übereinstimmung mit der zweiten Regelgruppe von vereinigten Clustern, die mindestens ein Steuerobjekt gemeinsam besitzen.

14. System nach einem der Ansprüche 8 bis 13, wobei der Generator (170) ferner konfiguriert ist, die iterative Erzeugung von vereinigten Objekt-Clustern zu beenden, wenn ein Stoppkriterium erfüllt ist, wobei das Stoppkriterium aus der folgenden Gruppe ausgewählt ist: alle Steuerobjekte, die der Markierungsliste zugeordnet sind, sind in einem bestimmten vereinigten Objekt-Cluster der letzten Iteration enthalten; alle Steuerobjekte eines oder mehrerer vordefinierter Objekttypen sind in einem bestimmten vereinigten Objekt-Cluster der letzten Iteration enthalten; und eine Beendigungsanweisung wird von einem Anwender empfangen.

15. System nach einem der Ansprüche 8 bis 14, wobei eine bestimmte Regel der ersten Regelgruppe, um Objekt-Cluster anhand der empfangenen Betriebsdaten zu identifizieren, die Verwendung eines oder mehrerer statistischer Maße, die von den Betriebsdaten ableitbar sind, enthält.

## Revendications

1. Procédé mis en œuvre par ordinateur (1000) pour générer une structure de données de topologie d'installation à partir de données de fonctionnement créées par au moins un sous-ensemble d'objets de commande d'un système d'automatisation durant le fonctionnement de l'installation, la structure de données de topologie d'installation reflétant au moins une partie de la topologie de l'installation, le procédé étant **caractérisé en ce qu'**il comprend les étapes suivantes :
l'obtention (1100) d'une liste de balises (160) comprenant une liste de signaux associés au moins au sous-ensemble d'objets de commande, la liste de balises comportant au moins un identifiant de composant et un type de chaque signal desdits objets de commande ;
la réception (1200) de données de fonctionnement en provenance desdits objets de commande, les données de fonctionnement représentant une pluralité d'états de fonctionnement différents du fonctionnement de l'installation ;
l'application (1300) d'un premier ensemble de règles (130) aux données de fonctionnement reçues, le premier ensemble de règles comportant des règles configurées pour identifier une pluralité de grappes d'objets comportant des objets de commande connectés en dérivant, à partir des données de fonctionnement reçues, des corrélations entre lesdits objets de commande connectés, les corrélations indiquant un couplage dans le monde réel des objets de commande connectés au sein des grappes d'objets respectives ;
l'application itérative (1400) d'un second ensemble de règles (140) à la pluralité de grappes d'objets, le second ensemble de règles étant configuré pour identifier des combinaisons cohérentes des grappes d'objets en tant que grappes d'objets supplémentaires en identifiant des objets de commande appartenant à au moins deux grappes d'objets et combinant les au moins deux grappes d'objets conformément à une ou plusieurs règles du second ensemble de règles ;
la génération (1500), dans la structure de données de topologie d'installation, pour les grappes d'objets, de représentations des objets de commande connectés respectifs, et de représentations des connexions entre les représentations d'objets de commande.

2. Procédé selon la revendication 1, dans lequel la liste de balises est obtenue à partir d'une liste de signaux du système d'automatisation.

3. Procédé selon la revendication 2, dans lequel la liste de signaux comporte des métadonnées utilisées pour l'identification d'objets de commande particuliers, les métadonnées comportant n'importe laquelle des données suivantes : noms, unités de mesure, description, limites d'alarme, et structure fonctionnelle.

4. Procédé selon l'une quelconque des revendications précédentes, dans lequel le couplage dans le monde réel entre deux objets de commande connectés particuliers correspond à n'importe lequel des couplages suivants : couplage basé sur un flux de matériau, couplage basé sur un flux d'énergie, et couplage basé sur un flux d'informations.

5. Procédé selon l'une quelconque des revendications précédentes, dans lequel le premier ensemble de règles comporte des règles de régime permanent pour évaluer des données de fonctionnement générées durant un fonctionnement en flux continu de l'installation, et comporte en outre des règles d'état de changement pour évaluer des données de fonctionnement générées en réponse à un changement de l'état de fonctionnement de l'installation.

6. Procédé selon l'une quelconque des revendications précédentes, dans lequel la structure de données de topologie d'installation générée sert d'entrée pour une ou plusieurs des fonctions suivantes afin d'améliorer le rendement, la production, le temps de marche ou la sécurité de l'installation :
- groupement d'alarmes ;
- évaluation de premières alarmes déclenchées, et
- analyse d'anomalies dans des réseaux à flux.

7. Produit-programme informatique comprenant des instructions pour générer une structure de données de topologie d'installation (150) à partir de données de fonctionnement (OD) créées par au moins un sous-ensemble d'objets de commande (310) d'un système d'automatisation durant le fonctionnement de l'installation, la structure de données de topologie d'installation reflétant au moins une partie de la topologie de l'installation, le produit-programme informatique, une fois chargé dans une mémoire d'un dispositif informatique et exécuté par l'au moins un processeur du dispositif informatique, étant adapté pour exécuter les étapes du procédé mis en œuvre par ordinateur selon n'importe quelle revendication précédente.

8. Système informatique (100) pour générer une structure de données de topologie d'installation (150) à partir de données de fonctionnement (OD) créées par au moins un sous-ensemble d'objets de commande (310) d'un système d'automatisation durant le fonctionnement de l'installation, la structure de données de topologie d'installation reflétant au moins une partie de la topologie de l'installation, le système étant **caractérisé en ce qu'**il comprend :
un moyen d'obtention d'une liste de balises (160) comprenant une liste de signaux associés au moins au sous-ensemble d'objets de commande, la liste de balises comportant au moins un identifiant de composant et un type de chaque signal desdits objets de commande (310) ;
un module d'interface (110) configuré pour recevoir des données de fonctionnement (OD) en provenance desdits objets de commande (310), les données de fonctionnement représentant une pluralité d'états de fonctionnement différents du fonctionnement de l'installation ;
un moteur de règles (120) configuré pour :
appliquer un premier ensemble de règles (130) aux données de fonctionnement (OD) reçues, le premier ensemble de règles comportant des règles configurées pour identifier une pluralité de grappes d'objets comportant des objets de commande connectés en dérivant, à partir des données de fonctionnement reçues, des corrélations entre lesdits objets de commande connectés, les corrélations indiquant un couplage dans le monde réel des objets de commande connectés au sein des grappes d'objets respectives ; et
appliquer itérativement un second ensemble de règles (140) à la pluralité de grappes d'objets, le second ensemble de règles étant configuré pour identifier des combinaisons cohérentes des grappes d'objets en tant que grappes d'objets supplémentaires en identifiant des objets de commande connectés appartenant à au moins deux grappes d'objets et combinant les au moins deux grappes d'objets conformément à une ou plusieurs règles du second ensemble de règles ; et
un module générateur (170) configuré pour générer, dans la structure de données de topologie d'installation (150), pour les grappes d'objets, des représentations (R1 à Rn) des objets de commande connectés respectifs, et des représentations (C1 à Cn) des connexions entre les représentations d'objets de commande (R1 à Rn).

9. Système selon la revendication 8, dans lequel la liste de balises est obtenue à partir d'une liste de signaux du système d'automatisation.

10. Système selon la revendication 9, dans lequel la liste de signaux comporte des métadonnées utilisées pour l'identification d'objets de commande particuliers, les métadonnées comportant n'importe laquelle des données suivantes : noms, unités de mesure, description, limites d'alarme, et structure fonctionnelle.

11. Système selon l'une quelconque des revendications 8 à 10, dans lequel le couplage dans le monde réel entre deux objets de commande connectés particuliers correspond à n'importe lequel des couplages suivants : couplage basé sur un flux de matériau, couplage basé sur un flux d'énergie, et couplage basé sur un flux d'informations.

12. Système selon l'une quelconque des revendications 8 à 11, dans lequel le premier ensemble de règles comporte des règles de régime permanent pour évaluer des données de fonctionnement générées durant un fonctionnement en flux continu de l'installation, et comporte en outre des règles d'état de changement pour évaluer des données de fonctionnement générées en réponse à un changement de l'état de fonctionnement de l'installation.

13. Système selon l'une quelconque des revendications 8 à 12, dans lequel le moteur de règles (120) et le générateur (170) sont configurés en outre pour :
générer itérativement des grappes d'objets combinées supplémentaires en combinant, conformément au second ensemble de règles, des grappes d'objets combinées ayant au moins un objet de commande en commun.

14. Système selon l'une quelconque des revendications 8 à 13, dans lequel le générateur (170) est configuré en outre pour arrêter la génération itérative de grappes d'objets combinées quand un critère d'arrêt est satisfait, le critère d'arrêt étant sélectionné dans le groupe suivant : tous les objets de commande associés à la liste de balises sont inclus dans une grappe d'objets combinée particulière de la dernière itération ; tous les objets de commande d'un ou de plusieurs types d'objets prédéfinis sont inclus dans une grappe d'objets combinée particulière de la dernière itération ; et une instruction d'arrêt est reçue d'un utilisateur.

15. Système selon l'une quelconque des revendications 8 à 14, dans lequel une règle particulière du premier ensemble de règles pour identifier des grappes d'objets en fonction des données de fonctionnement reçues comporte l'utilisation d'une ou de plusieurs mesures statistiques pouvant être dérivées des données de fonctionnement.
